# EUROPEAN PATENT APPLICATION

(11) **EP 2 645 758 A1**
(43) Date of publication of application: **02.10.2013**
(21) Application number: 11828099.9
(22) Date of filing: 26.09.2011
(51) Int. Cl.: H04W 8/22

(54) **METHOD AND DEVICE FOR DATA TRANSMISSION**

(30) Priority: 30.09.2010 CN 201010500482
(71) Applicant: China Academy of Telecommunications Technology, Haidian District Beijing 100191 (CN)
(72) Inventor: FENG, Yuan, Beijing 100191 (CN); ZHAO, Yi, Beijing 100191 (CN); QUAN, Haiyang, Beijing 100191 (CN); ZHAO, Rui, Beijing 100191 (CN); FANG, Jiayi, Beijing 100191 (CN)
(74) Representative: Lantos, Mihaly
(86) International application number: PCT/CN2011/080174
(87) International publication number: WO 2012/041203

(57) **Abstract**

The present invention discloses a method and device for data transmission. The method comprises: an access network device determining the type of a terminal according to the information thereof, determining a data transmission mode corresponding to the terminal according to the type of the terminal, and carrying out data transmission with the terminal according to the data transmission mode. In the embodiments of the present invention, the access network device determines the types of terminals with different capabilities by obtaining terminal information, and adopts different data transmission modes to send data for terminals with different capabilities, thus it can support lower-cost and lower processing complexity M2M terminal with lower capacity than current UE, thereby promoting the large-scale application of M2M services.

## Description

This application requires the priority to Chinese patent application, which was submitted to the Chinese Patent Office on September 30, 2010, the application No. 201010500482.9, invention name as "Method and Device for Data Transmission", with all of its content by reference in this application.

### Field of the Present Invention

The present invention relates to the field of communication technology, in particular to the method and device for data transmission.

### Background of the Present Invention

As a new communication concept, M2M (Machine-to-machine) communication aims at combining various communication technologies (e.g.: M2M communication, machine controlled communication, human-computer interaction communication, mobile internet communication, etc.), so as to promote the development of social production and life style. Therein, current mobile communication network is designed for interpersonal communication (e.g.: determination of network capacity, etc.). If the current mobile communication network is to be used for supporting M2M communication, the mechanism of current mobile communication system shall be optimized based on the characteristics of M2M communication, thus better realizing M2M communication with no or minor influence on traditional interpersonal communication.

To be specific, some possible characteristics of MTC communication as currently recognized are the following: An MTC terminal has low mobility.

The time of data transmission between MTC terminal and network side is controllable; viz. MTC terminal can only be accessed within the time range specified by network.

Data transmission between MTC terminal and network side has low requirements on real time, viz. time tolerance.

MTC terminal is limited in power, so with higher requirements on power consumption.

There is only a small data amount of information transmission performed between MTC terminal and network side.

MTC terminal can be managed in unit of group.

In practical application, one MTC terminal can has one or several of the aforementioned characteristics, while current 3G and LTE (Long Term Evolution) system fails to designed and support the function of MTC terminal communication. That is to say, one MTC terminal can only be treated as a common terminal and is independent from user, viz. strictly it cannot be named as M2M communication or machine communication.

In the procedure of realizing the objects of the present invention, at least the following problems existing in the current technologies were found:

In current LTE system , UE (User Equipment) capability are classify based on H2H (Human to Human) communication needs, while MTC service features is great different from that of H2H communication, e.g.: data volume transmitted is usually small and M2M application is not sensitive to delay in many M2M scenes.

For M2M application with small data volume, the requirements of maximum TB (transmission block) transmitted in single TTI (transmission time interval) and decoder's decoding length is lower than H2H (Human to Human) communication; as for M2M application scene not sensitive to transmission delay, the requirements of the HARQ (Hybrid Auto Repeat request) processes supported by M2M terminal during data transmission is lower than H2H (Human to Human) communication.

To be specific, reduction of both the requirements on maximum TB transmitted in single TTI and the number of HARQ processes can lower the requirements on HARQ soft buffer and L2 buffer, thus reducing the terminal cost. That is, how to reduce terminal cost, which methods should be adopted to introduce new low-capacity terminal grade and how to guarantee the network side is capable of supporting the terminal grade and common terminal grade after new low-capacity terminal grade is introduced through these methods, which are not solved in current technology.

### Summary of the Present Invention

The embodiments of the present invention put forward the method and device for data transmission, so as to send data for terminals of different capacities by various transmission modes.

For achieving the above purpose, the embodiments of the present invention put forward a method for data transmission, which comprises:

The access network device determines the type of the terminal according to the information thereof;

The access network device determines a data transmission mode corresponding to the terminal according to the type of terminal;

The access network device carries out data transmission with the terminal according to the data transmission mode.

The embodiments of the present invention put forward a device for data transmission, which comprises:

The first determination module for determining the terminal type acording to terminal information;

The second determination module for determining the corresponding data transmission mode of the terminal based on the terminal type determined by the first determination module; Transmission module for data transmission with the terminal based on the data transmission mode determined by the second determination module.

Compared with the present technology, the embodiments of the present invention at least possess the following advantages:

Access network device determines type of terminal with various capacities based on the terminal information acquired, and performs data transmission with terminals of different capacities through various transmission modes, which can support low-cost and low processing complexity M2M terminal with lower capacity than current UE, thus promoting large-scale application of M2M service.

### Brief Description of the Drawings

Fig.1 is a schematic diagram of a signaling flow in a process of establishing a connection c in current LTE system;
Fig.2 is the structure diagram of Downlink Physical Layer Channel in current technology;
Fig.3 is the flow diagram of the method for data transmission provided in Embodiment I of the present invention;
Fig.4 is the flow diagram of the method for data transmission provided in Embodiment II of the present invention;
Fig.5 is the flow diagram of the method for data transmission provided in Embodiment III of the present invention;
Fig. 6 is the diagram of RRC connection setup complete message in Embodiment V of the present invention;
Fig.7 is the flow diagram of the method for data transmission provided in Embodiment VI of the present invention.

### Detailed Description of the Embodiments of the Present Invention

The technical solutions in the present invention are explained in a detailed way with reference to the drawings in the present invention.

### (1) Data transmission process of LTE system

In LTE system, MAC (Media Access Control) layer entity of sending node is responsible for assembling the data received from high level and requiring sending into TB (transmission block) and deliver TB to physical layer which will send it to receiving node through air interface after encoding, modulation, etc. Physical layer entity of receiving node will demodulate and decode the received data and deliver the processed TB to MAC layer, and then the MAC layer entity will deliver the demultiplexed data of TB to corresponding high-level entity for processing.

To be specific, TB sending can be managed by process. LTE system adopts HARQ mechanism for improving the reliability of data transmission, viz. each TB can correspond to one HARQ process. Therein, the number of HARQ process is related to RTT (Round trip time), viz. related to transmission delay and UE/eNB processing delay.

For example, as for LTE FDD (Frequency Division Duplex) system, RTT is set as: 1ms (data transmission time from sending end to receiving end) +3ms (data processing time of receiving end) +1ms (response data transmission time of receiving end) +3ms (response data processing time of sending end) =8ms. In order to fully utilize time-frequency resource and increase scheduling chance (viz. corresponding HARQ process shall be available at any time for processing various TBs), the number of uplink/downlink HARQ processes can be set to 8 in LTE FDD system.

As for LTE TDD (Time Division Duplexing) system which has several uplink/downlink subframe configuration the sending time of feedback information is not only affected by data processing time but also related to uplink/downlink subframe configuration Take downlink data transmission for example. The terminal cannot send feedback information to network side on non-uplink subframe. Therefore, difference exists in RRT time for different uplink/downlink subframe configurations, viz. differences in number of HARQ process. Therein, relationship between number of HARQ processes and UL/DL configuration is shown in Table 1 and Table 2.

**Table 1: Number of synchronous UL HARQ processes for TDD**

| TDD UL/DL configuration | Number of HARQ processes for normal HARQ operation | Number of HARQ processes for subframe bundling operation |
|---|---|---|
| 0 | 7 | 3 |
| 1 | 4 | 2 |
| 2 | 2 | N/A |
| 3 | 3 | N/A |
| 4 | 2 | N/A |
| 5 | 1 | N/A |
| 6 | 6 | 3 |

**Table 2: Maximum number of DL HARQ processes for TDD**

| TDD TDD UL/DL configuration | Maximum number of HARQ processes |
|---|---|
| 0 | 4 |
| 1 | 7 |
| 2 | 10 |
| 3 | 9 |
| 4 | 12 |
| 5 | 15 |
| 6 | 6 |

### (2) Signaling flow before data transmission

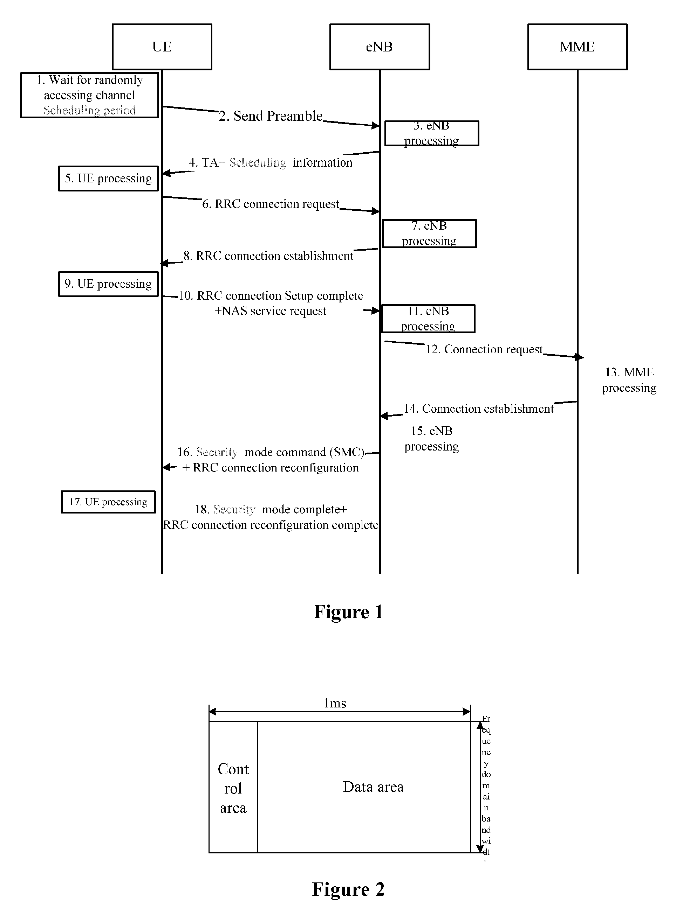

In LTE system, the signaling flow of establishing a connection for UE which is in idle state and has data to be sent is shown in Fig.1, which comprises:
(a) When UE has data to be sent, it should first set up uplink synchronization through random access process (viz. steps 2, 4, 6 and 8 in Fig.1). During such process, first wait for the latest PRACH (Physical Random Access Channel) resource which configured by system (PRACH) and select a preamble (Random Access Preamble) and send Msg1 to eNB.
(b) After receiving the preamble (Msg1) sent by UE, eNB will send random access response in random access Response window (Msg2).

Therein, Msg2 may includes: back off parameter random access preamble identification corresponding to the transmitted random Access preamble, UL TA (Uplink Timing Alignment) command, uplink grant, temporary C-RNTI (Cell Radio Network Temporary Identity), etc.

To be specific, back off parameter is applied to indicate the delay mean value of UE initiating the next random access if the current one fails, Besides, UE can determine the random access response sent to itself according to RA-RNTI (Random Access Radio Network Temporary Identity) and preamble identification in Msg2. If the Random Access Response contains a Random Access Preamble identifier corresponding to the transmitted Random Access Preamble , the UE shall consider this random access response reception successful, so that Msg3 will be sent to network afterwards; if UE fails to correctly receive Msg2, the delay for initiating next random access will be determined based on delay limit of back off parameter and random access resource will be selected for initiating next random access.

Furthermore, after reaching the maximum random access times, MAC layer of UE will indicate random access problems to RRC (Radio Resource Control) layer and trigger radio link failure process. (c) After receiving Msg2, UE will send Msg3 on uplink resource assigned in Msg2.

As for different scenes, Msg3 comprises various contents. During initial access, Msg3 carries RRCConnectionRequest message generated by RRC. (d) eNB and UE finish final resolution through Msg4.

Contents in Msg4 correspond to those in Msg3. During initial access, Msg4 carries Contention Resolution Identity MAC CE, which comprises the CCCH (Common Control Channel) and SDU (Service Data Unit) transmitted by UE in Msg3. After receiving the MAC CE, UE will compare with its own RRC layer information for finishing Contention resolution.

Moreover, Msg4 can also comprise RRCConnectionSetup message for establishing UE Signalling radio bearer 1 (SRB1). (e) After Contention resolution, UE will establish Signalling radio bearer 1 (SRB1) based on the information in RRCConnectionSetup message, and send RRCConnectionSetupComplete message to network side.

It needs to be noticed that NAS (Non Access Stratum) service request message can be sent to network side while sending RRCConnectionSetupComplete message.
(f) After receiving RRCConnectionSetupComplete message, eNB will send the NAS service request message carried in "initial UE message" (Mobility Management Entity) to MME (Mobility Management Entity) for requesting MME to establish connection between corresponding eNB and core network NE (network element) (For example, control plane connection with MME and radio access bearer E-RAB with S-GW (Serving Gateway)).
(g) MME will inform eNB of the corresponding connection information and the capacity information of UE carried in S1 interface message "initial context setup request".
(h) eNB will send SecurityModeCommand (SMC) and RRCConnectionReconfiguration message to UE for activating security of UE and establishing data radio bearer (DRB), other signalling radio bearers (SBR2), etc. for UE.

Therein, SMC and RRCConnectionReconfiguration can be sent in one RRC message or sent respectively. (i) After security activation , DRB and SRB2 configuration, UE will send SecurityModeComplete message and RRCConnectionReconfigurationComplete message to network.

Now, user plane data of UE will be transmitted through DRB and E-RAB and sent to core network through eNB and S-GW; control signalling of UE and core network will be sent to MME through SRB and control plane connection between eNB and MME.

Besides, for UE in detach state, when having data to send, UE shall initiate atttach process. Moreover, to determine the validity of user, it also needs to be confirmed by authentication.

### (3) UE capability level

In LTE system, UE capability can be determined by maximum size of total TBs sent at each TTI (transmission time interval) in uplinks and downlinks, maximum size of one TB sent at each TTI, the size of soft buffer of HARQ, the size of layer 2 soft buffers and other factors, and divided into 5 levels generally. Maximum number of bits of TB transmission within a TTI is determined by peak transmission rate supported by UE, while the size of soft buffer (namely soft channel) of UE is determined by coding efficiency, the largest TB supported at within a TTI of UE and the number of HARQ processes.

In addition, parameters of UE with different capabilities are different, and 5 UE capability levels (namely category 1 to category 5) defined currently should support 8 HARQ processes. Downlink physical layer parameter values set by different UE capability levels is shown in Table 3, Uplink physical layer parameter values set by different UE capability levels is shown in Table 4 and the size of layer 2soft buffers set by different UE capability levels is shown in Table 5.

**Table 3: Downlink physical layer parameter values set by the field UE-Category**

| UE category | Maximum number of DL-SCH transport block bits received within a TTI | Maximum number of bits of a DL-SCH transport block received within a TTI | Total number of soft channel bits | Maximum number of supported layers for spatial multiplexing in DL |
|---|---|---|---|---|
| Category 1 | 10,296 | 10,296 | 250,368 | 1 |
| Category 2 | 51,024 | 51,024 | 1,237,248 | 2 |
| Category 3 | 102,048 | 75,376 | 1,237,248 | 2 |
| Category 4 | 150,752 | 75,376 | 1,827,072 | 2 |
| Category 5 | 299,552 | 149,776 | 3,667,200 | 4 |

**Table 4: Uplink physical layer parameter values set by the field ue-Category**

| UE category | Maximum number of bits of an UL-SCH transport block transmitted within a TTI | Support for 64QAM in UL |
|---|---|---|
| Category 1 | 5,160 | No |
| Category 2 | 25,456 | No |
| Category 3 | 51,024 | No |
| Category 4 | 51,024 | No |
| Category 5 | 75,376 | Yes |

**Table 5: Total layer 2 buffer sizes set by the field ue-Category**

| UE category | Total layer 2 buffer size [bytes] |
|---|---|
| Category 1 | 150,000 |
| Category 2 | 700,000 |
| Category 3 | 1,400,000 |
| Category 4 | 1,900,000 |
| Category 5 | 3,500,000 |

It should be noted that UE capability level in Tables 3, 4 and 5 is named UE category in LTE standards. To distinguish it from the terminal category defined in the embodiments of the present invention, hereby UE capability level is adopted for description.

### (4) Encoding and decoding complexity

In an LTE system, the control area on physical layer can be encoded by convolutional codes, while the data area by tabor codes.

The length of turbo decoder is related to that of the largest supported TB, and the cost of a turbo encoder is related to the decoded length supported by the decoder. A structure diagram of channels on downlink physical layer is shown in Fig.2.

In traditional H2H communications, a terminal support voice call and many other services, such as video call, online request, etc. The present 3G LTE is designed for meeting H2H communications and service requirement. To meet the requirements for a wide range of requirement, 3G LTE terminals should meet the set capability requirements. The LTE FDD system is required to support 8 HARQ processes, and the size of HARQ soft buffers should meet the requirements for 8 processes.

Compared with H2H communications, M2M communications are featured by requiring single terminal function in many applications. Generally, M2M terminals need to have limited functions which only meet the requirements of M2M communications. If they are processed as traditional H2H terminals, it will increase unnecessary terminal design complexity and terminal costs, and then affect M2M business promotion.

In response to the aforementioned problems, Embodiments of the present invention provide a method and device for data transmission. An access network device determines the type of a terminal according to the information thereof and transimit the data with M2M terminals of different capabilities according to different transmission modes, which can support M2M terminals with lower cost and lower processing capabilities compared with the present UE, thus promoting large-scale applications of M2M business.

It should be noted that, the method provided in the embodiments of the present invention is not only applicable to an LTE system and an LTE-A system but also to a UMTS (Universal Mobile Telecommunications System). Access network devices in the UMTS refer to such devices of radio network controllers/base station RNC\NB and other such devices which will emerge later, such as, relay, core network devices including SGSN (Serving GPRS Support Node), etc. The connection establishment and signaling functions of terminals and access network devices are essentially similar to those of access and core network devices, and only message names or specific implementations are different. To simplify the description, the LTE system as an example is mainly described in the embodiments of the present invention, and the implementation process in the UMTS can be realized with the similar method. Hereby, the latter will not be described.

The technical solution of the embodiments of the present invention will be described clearly and completely in combination with the drawings. Apparently, the described embodiments are only a part of the embodiments of the present invention. Other embodiments based on the embodiments of the present invention obtained by technical personnel of the field without contributing creative work shall be protected by the present invention.

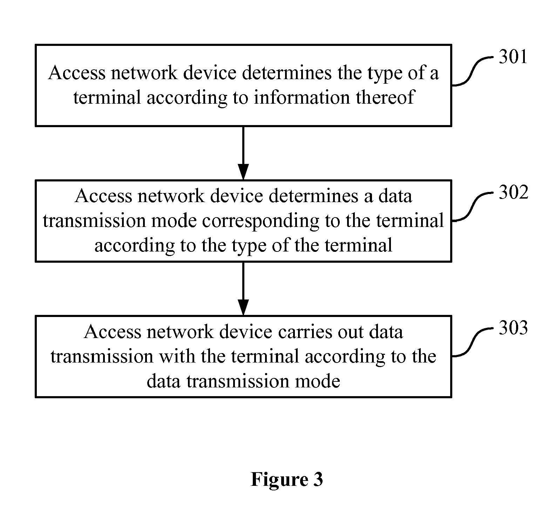

The embodiments 1 of the present invention provide a method for data transmission, comprising the following steps as shown in Fig.3:
Step 301, an access network device determines the type of a terminal according to the information thereof, wherein the type of terminal includes a MTC terminal or an H2H terminal (namely the present traditional terminal) or a terminal requiring a specific transmission mode.

In the embodiments of the present invention, methods of determining the type of a terminal include but not limited to the followings:
(1) An access network device determines the type of a terminal according to the UECapabilityInformation message reported by the terminal.

Specifically, the access network device can acquire the capability information reported by the terminal, and determine the capability level of the terminal according to such information, and then determine the type of the terminal according to the corresponding relation between capability levels and terminal types.

For example, the corresponding relation between capability levels and terminal types is as follows: capability level 6 represents an MTC terminal and capability levels 1 to 5represents an H2H terminal. After receiving the capability information, the access network device can determine whether the terminal is a MTC terminal according to the capability level of the terminal

It should be noted that, the capability information reported by the terminal includes the capability level information, wireless capability information, etc. thereof. So The access network device can identify the type of the terminal according to other capability information such as radio capability information except the capability level information.
(2) An access network device identifies the type of a terminal according to the capability instruction information indicated by a core network device (for example, MME).

Specifically, the access network device can directly determine the type of the terminal according to the capability instruction information after receiving such information from an MME. For example, when the MME indicates that the terminal is an MTC terminal, the access network device determines that the terminal is an MTC terminal according to such information. Another example is that when the MME indicates that the capability level of the terminal is 6, the access network device determines that the terminal is an MTC terminal according to such information and the mapping between capability leveland terminal type.
(3) An access network device determines the type of a terminal according to the resource used in random access process.

Specifically, the access network device can allocate different PRACH (Physical Random Access Channel) resources by terminal type , and inform terminals of the allocation information then , UE will select according PRACH resource based on its own type during random access process,

And then the access network device can determine the type of the terminal according to the the PRACH resource that the terminal used in random access process and the mapping between PRACH resource and terminal type.

For example, the access network device divides PRACH Resource Index 1 for MTC terminals and informs terminals of the classified information of PRACH resources. Here Take an MTC terminal for example; it will send the Preamble on PRACH resource 1 during random access process. And then the access network device can determine that the terminal is an MTC terminal according to the he mapping between PRACH resource and terminal type.

In addition, the access network device can divide different preamble resources for terminals of different types.

For example, the access network device allocates preamble 1 to preamble 20 for MTC terminal and informs the terminals of the classified information of preamble. The terminal will select corresponding preamble on PRACH resources for random access based on its own type. Furthermore, the access network device can determine the type of the terminal according to the preamble index information and mapping between preamble resource and terminal type. (4) An access network device determines the type of a terminal according to a dedicated message in terminal random access process, wherein the dedicated message includes but not limited to Msg3 in random access process.

Specifically, when setting different CCCH LCID (logical channel identities) for terminals of different types, the access network device can determine the type of the terminal according to such identities carried in the dedicated message during random access process; or when the type information of a terminal is carried in the MAC CE in the random access process, the access network device can determine the type of the terminal according to the MAC CE; or when the type information of a terminal is carried in RRCConnectionRequest messages, the access network device can determine the type of the terminal according to such messages in the random access process. (5) An access network device determines the type of a terminal according to other messages therefrom, wherein other messages include but not limited to RRCConnectionSetupComplete messages.

Herein, when the type information of the terminal is carried in RRCConnectionSetupComplete messages, the access network device can determine the type of the terminal after receiving such messages; or

When the type information of the terminal is carried in other RRC messages, the access network device can determine the type of the terminal after receiving corresponding RRC messages; or When the type information of the terminal is carried in the MAC CE, the access network device can determine the type of the terminal after receiving the MAC CE of such information.

Step 302, an access network device determines a data transmission mode corresponding to a terminal base on the type of the terminal.

Specifically, in the previous step, the access network device can set a corresponding relation between terminal types and data transmission modes according to actual conditions. In the step, the access network device can determine a data transmission mode corresponding to a terminal base on the type of the terminal and the corresponding relation.

In the embodiments of the present invention, corresponding relations between terminal types and data transmission modes set by an access network device include but not limited to those between terminal types by an access network device and the number of HARQ processes, and/or between terminal types by an access network device and the size of a TB, and/or terminal types by an access network device and encoding/decoding modes.

For example, if only one HARQ process represent MTC terminal which set by the access network device, and a terminal is an MTC terminal in the above step, the number of HARQ processes is 1 in the step.

Step 303, an access network device carries out data transmission with a terminal according to a corresponding data transmission mode. For example, the access network device carries out data transmission with a terminal according to a data transmission mode with 1 HARQ process. Embodiment 2 of the present invention provides a method for data transmission. In the embodiment, an access network device determines the type of a terminal according to the capability information indicated by an MME.

In the embodiment, the corresponding relations between terminal types and data transmission modes is as follows, 1 HARQ process is defined for an MTC terminal , eNB (evolved node B) (in the embodiment, an access network device, namely an eNB is taken as example) identifies whether a terminal is an MTC terminal by UE radio access capability, wherein in the capability, an H2H terminal is reflected by 5 UE capability levels (from level 1 to level 5), while an MTC terminal by a UE capability level (level 6).

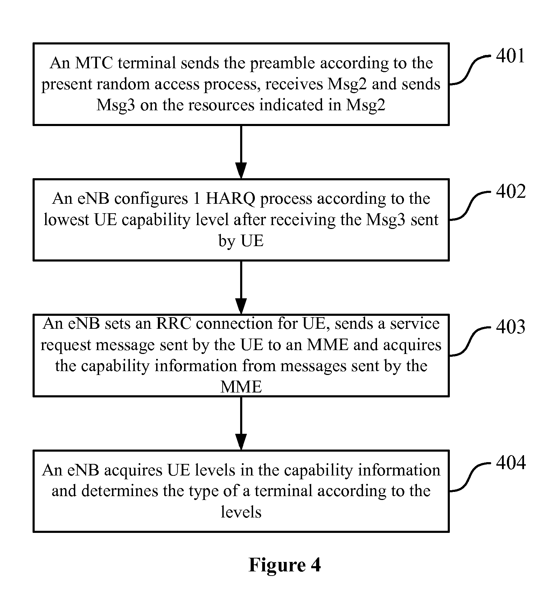

Based on the above conditions, the method comprises the following steps as shown in Fig.4:
Step 401, an MTC terminal sends the preamble according to the present random access process, receives Msg2 and sends Msg3 on the resources indicated in Msg2.
Step 402, an eNB acquire that the capability level of the UE is the lowest, and then configures 1 HARQ process for the UE after receiving the Msg3 sent by UE.

Compared with 8 HARQ processes in LTE FDD mode of an H2H terminal, an MTC terminal only support 1 HARQ process. That is, the minimum value, namely 1 HARQ process can be selected and an eNB schedules UE using single process.

Step 403, eNB establishes a RRC connection for UE, sends the service request message sent by the UE to an MME and acquires the UE capability information from messages sent by the MME. Step 404, an eNB acquires UE capability levels in the capability information and determines the type of a terminal according to the capability levels.

In the embodiment, if the UE category value is 6, an eNB determines that a terminal is an MTC terminal. For the MTC terminal corresponds to a data transmission mode with 1 HARQ process, the UE continues to be scheduled according to single HARQ process during the subsequent terminal data transmission.

In addition, if the value of UE categories is one to five, then eNB determines that the terminal is an H2H terminal and the scheduling is carried out according to the number of HARQ processes specified in current standards.

It should be noted that, methods of single process scheduling (the number of HARQ process is 1) include the followings. Taking downlink scheduling as an example, when an eNB allocates an HARQ process for an MTC terminal to carry out data transmission, it cannot allocate resources for the MTC terminal once more even if there are downlink data need to be scheduled until the data being sent in the HARQ process are sent successfully, or the data reaches the maximum number of HARQ transmissions, or new data can be sent in the HARQ process in accordance with other rules.

In addition, in practical applications, several terminal levels such as UE category 6, UE category 7, etc. can be added for an MTC terminal according to M2M applications and business requirements. Correspondingly, different terminal levels can support the same or different HARQ processes, for example, 1 HARQ process or 2 HARQ processes, support different sizes of TBs, and adopt different encoding/decoding methods, which will not be explained here again.

Embodiment 3 of the present invention provides a method for data transmission. In the embodiment, an access network device determines the type of a terminal according to resource used by UE in random access process, that is to say, an eNB judges the type of UE through the random access resource information.

In the embodiment, the number of HARQ processes supported by a defined MTC terminal is the same as that supported by the present H2H terminal. For example, in a FDD system, 8 HARQ processes are supported by a defined MTC terminal, while 500 bits are received by single downlink TTI. Correspondingly, for LTE FDD, 8 HARQ processes are supported by an H2H terminal in the current protocol, while 10,296 bits are received by single downlink TTI.

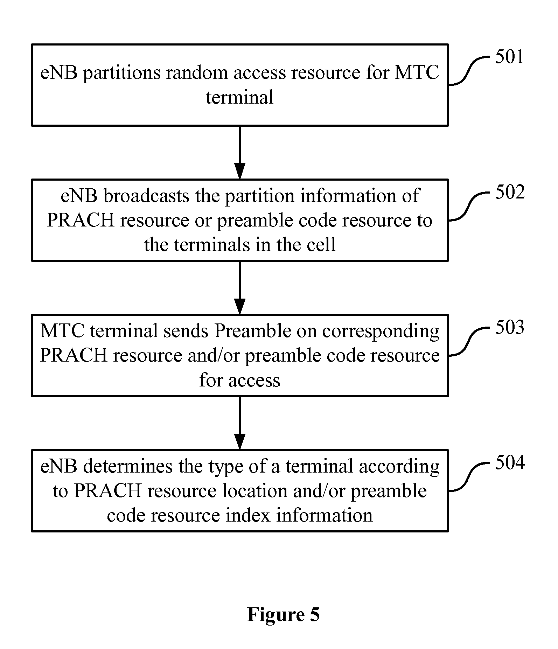

Based on the above conditions, the method comprises the following steps as shown in Fig.5:
Step 501, an eNB allocates random access recourses for MTC terminal, wherein the random access recourses refer to PRACH recourses or preamble recourses.

Specifically, when dividing dedicated preamble recourses, there are 64 preamble recourses in each cell of current LTE system. So UE selects a preamble randomly f, and sends it on PRACH resource, and detects preamble sent by different users using characteristics of the sequence. Therefore, the eNB can distinguish an MTC terminal from an H2H terminal by dividing different preamble groups for the two type terminals.

In addition, when dividing dedicated PRACH resources, for an LTE FDD system, 10 PRACH resources per 10ms at most can be configured in a single cell of a system, and a sub-frame is available in a random access resource at most. 6 PRACH resources per 10ms at most can be configured in a single cell of the LTE FDD system, and the number of uplink sub-frames in radio frames under the configuration of different downlink sub-frames, that is to say, the number of PRACHs in a sub-frame will be different and the maximum number of PRACHs supported is the same all the time. Therefore, an eNB can distinguish an MTC terminal from an H2H terminal or a terminal requiring specific transmission mode by allocating different PRACH resources to terminals of different type. The terminal requiring specific transmission mode refers to a terminal with a low UE capability level by other definitions, a terminal with low priority or high priority, a delay tolerable terminal, etc.

Step 502, an eNB broadcasts the classified information of PRACH resources or preamble resources to terminals in a cell.

Step 503, an MTC terminal sends the Preamble on corresponding PRACH resources and/or carries the preamble resources in random access.

Specifically, when getting PRACH resources and preamble resources used on an MTC terminal, the terminal can select preamble from resources for MTC terminals in random access process. Step 504, an eNB determines the type of a terminal according to PRACH resources and/or the index information of preamble resources.

Specifically, after acquiring the PRACH resources or preamble resources, the eNB will judge whether such resources are dedicated to an MTC terminal. If so, the UE is an MTC terminal.

In addition, for an MTC terminal in subsequent scheduling process, less than 500 bits can be scheduled from UE within single downlink TTI, while for an H2H terminal, 10,296 bits can be scheduled from UE within single downlink TTI.

Embodiment 4 of the present invention provides a method for data transmission. In the embodiment, an access network device determines the type of a terminal according to a dedicated message during terminal random access. For example, an eNB judges the type of UE according to message 3 (Msg3) and MAC CE during the access.

In the embodiment, methods of judging the type of UE according to the information carried in Msg3 include but not limited to the followings:
(1) Judge the type of UE by setting a dedicated CCCH LCID(logical channel identity) for the access of an MTC terminal and sending Msg3.

For example, the LCID (logical channel identity) used in Msg3 for an H2H terminal in present LTE nets is that of UL CCCH (uplink common control channel) ,its value is 00000. In the embodiments of the present invention, an operable LCID, such as 01100, named MTC-UL-CCCH LCID is reserved for an MTC terminal. Thus after receiving Msg3, if the corresponding CCCHLCID is 01100, then access network device can identify the terminal is an MTC terminal.
(2) Identify the type of a terminal by adding non-critical extended IE in RRCConnectionRequest messages carried in Msg3.

Therefore, after receiving Msg3, an access network device can identify the type of a terminal according to the corresponding IE in the messages.
(3) add an new MAC CE carried in Msg3 and Make the type information of a terminal carried in MAC CE.

Therefore, after receiving Msg3, an access network device can directly identify the type of a terminal according to the contents of MAC CE. (4) Identify the type of a terminal according to present information fields in RRCConnectionRequest messages carried in Msg3, wherein the present information fields include but not limited to UE identities.

Specifically, allocate different S-TMSIs (SAE Temporary Mobile Station Identifier) (for example, distinguish an H2H terminal from an MTC terminal by setting 0 or 1 of a certain bit of S-TMSI or by allocating a certain S-TMSI range for an MTC terminal), thus using S-TMSIs as UE identities on a terminal. An eNB acquires the type of a terminal by reading UE identities.

Embodiment 5 of the present invention provides a method for data transmission. In the embodiment, an access network device determines the type of a terminal according other messages therefrom. For example, an eNB identify the type of UE according to RRCConnectionSetupComplete messages as well as other RRC messages and MAC CE carrying the type information of a terminal.

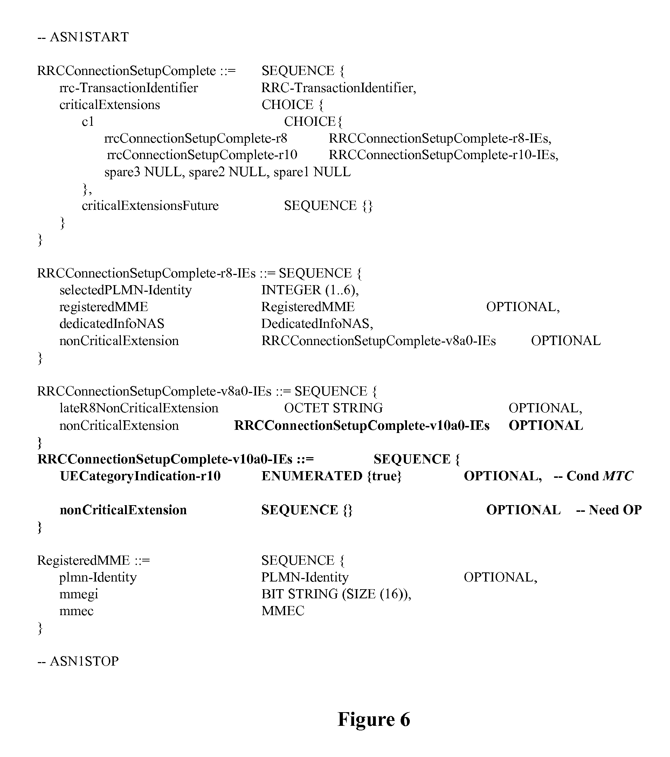

In the embodiment, identify the type of a terminal according to the information carried in RRCConnectionSetupComplete . For example, adding non-critical extended IE messages or other field in RRCConnectionSetupComplete message, and then, an eNB judges whether a terminal accessed at present is an MTC terminal according to UECategoryIndication included in RRCConnectionSetupComplete messages received. A schematic diagram of RRCConnectionSetupComplete messages is shown in Fig.6.

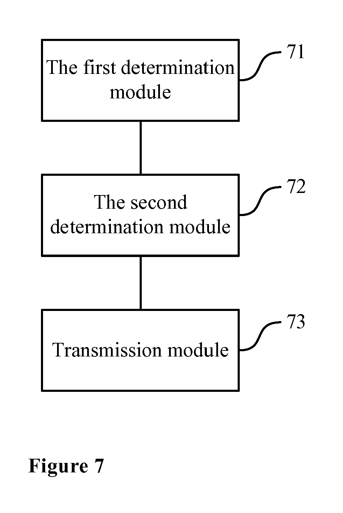

Based on the same inventive concept of the aforementioned method, Embodiment 6 provides a device for data transmission as shown in Fig.7, which comprises:

The first determination module 71, is used for determining the type of a terminal according to the information thereof. The terminal includes an MTC terminal, an H2H terminal or a terminal requiring specific transmission mode.

The second determination module 72, is used for determining the data transmission mode corresponding to the terminal according to the type of the terminal determined by the first determination module 71;

A transmission module 73, is used for carrying out data transmission with the terminal according to the data transmission mode determined by the second determination module 72.

The first determination module 71, is specifically used for determining the type of a terminal according to the capability instruction information reported by the terminal; or Determining the type of a terminal according to the capability instruction information of the terminal indicated by a core network device; or,

Determining the type of a terminal according to the resource information during terminal random access; or,

Determining the type of a terminal according to a dedicated message during terminal random access; or,

Determining the type of a terminal according to other messages thereof.

The first determination module 71, is specifically used for acquiring a capability message reported by the terminal and determining the capability level of the terminal according to the capability message.

Determining the type of the terminal according to corresponding relations between capability levels and terminal types and the capability level of the terminal.

The first determination module 71, is further used for receiving the capability instruction information of the core network device, wherein the information is used for indicating the type of the terminal.

Determining the type of the terminal according to the capability instruction information.

The first determination module 71, is further used for dividing different PRACH resources during physical random access for terminals of different types and sending the information on the resources to the terminal, wherein the terminal will send an uplink synchronized signal, Preamble in the corresponding location of the resources for random access according to its own type;

Determining the type of the terminal according to the PRACH resources used by terminal in random access process and the mapping relationship between PRACH resources and terminals types.

The first determination module 71, is further used for allocating different random access preamble resources to different types of terminals and sending the information on the resources to the terminal, wherein the terminal will use corresponding random access preamble on the resources for random access according to its own type;

Determining the type of the terminal according to the index information of random access preamble and the mapping relationship between random access preamble resources and terminals types.

The first determination module 71, is further used for determining the type of the terminal according to CCCH LCID (logical channel identities) carried in dedicated messages during the terminal random access process when setting different such identities for terminals of different types; or,

Determining the type of the terminal according to MAC CE carried during the terminal random access when the type information of the terminal is carried in the MAC CE during the access; or, Determining the type of the terminal according to RRCConnectionRequest messages carried during the terminal random access when the type information of the terminal is carried in the messages.

The first determination module 71, is further used for receiving RRCConnectionSetupComplete messages carrying the type information of the terminal therefrom and determining the type of the terminal according to the messages; or,

Receiving other RRC messages carrying the type information of the terminal therefrom and determining the type of the terminal according to the messages;

Receiving MAC CE carrying the type information of the terminal therefrom and determining the type of the terminal according to the MAC CE.

The second determination module 72, is specifically used for setting a corresponding relation between a terminal type and a data transmission mode and determining such corresponding mode of the terminal according to the type of the terminal and the relation.

The second determination module 72, is further used for setting a corresponding relation between a terminal type and the number of HARQ processes; and/or,

Setting a corresponding relation between a terminal type and the size of a TB; and/or

Setting a corresponding relation between a terminal type and an encoding/decoding method.

The transmission module 73, is also used for carrying out data transmission with a terminal according to a data transmission mode corresponding to a preset capability level.

Herein, modules of the inventive device can be integrated or deployed separately. Said modules can be either combined into one module or further decomposed into several sub-modules.

Through the description of the embodiments above, the technical personnel in this field can understand clearly that the present invention can be implemented by software and necessary general hardware platform or hardware (the former is better in most cases). Based on this understanding, the technical program or the part making contributions to the prior art of the present invention can be embodied by a form of software products essentially which can be stored in a storage medium, including a number of instructions for making a computer device (such as personal computers, servers, or network equipments, etc.) implement the methods described in the embodiments of the present invention.

The technical personnel in this field can be understood that the illustration is only schematic drawings of a preferred embodiment, and the module or process is not necessary for the implementation of the present invention.

The technical personnel in this field can be understood that the modules can be distributed in device of the embodiments according to the description of the embodiments above, and also can be varied in one or multiply device of the embodiments. The modules of the embodiments can be combined into a module, and also can be further split into several sub-modules.

The number of the embodiments is only to describe, it does not represent the pros and cons of the embodiments.

The descriptions above are just preferred implement ways of the present invention. It should be pointed that, for general technical personnel in this field, some improvement and decorating can be done, which should be as the protection scope of the present invention.

## Claims

1. A method for data transmission, wherein, comprising:
an access network device determining the type of a terminal according to the information thereof;
said access network device determining a data transmission mode corresponding to the terminal according to the type of the terminal;
said access network device carrying out data transmission with the terminal according to the data transmission mode.

2. The method of claim 1, wherein, said access network device determining the type of a terminal according to the information thereof, comprises:
said access network device determining the type of a terminal according to the capability indication information that terminal reports; or,
said access network device determining the type of a terminal according to the capability indication information of the terminal that core network device indicates; or,
said access network device determining the type of a terminal according to the random access resource information of the terminal; or,
said access network device determining the type of a terminal according to the random access dedicated message for the terminal; or,
said access network device determining the type of a terminal according to other messages from the terminal.

3. The method of claim 2, wherein, said access network device determining the type of a terminal according to the capability indication information that terminal reports, comprises:
said access network device obtaining the capability information that terminal reports and
determining the capability level of the terminal according to said capability information;
said access network device determining the type of a terminal according to the mapping relationship between the capability level and the type of the terminal as well as the capability level of the terminal.

4. The method of claim 2, wherein, said access network device determining the type of a terminal according to the capability indication information thereof, comprises:
said access network device receiving the capability indication information from the core network device, said capability indication information is used for indicating the type of a terminal;
said access network device determining the type of a terminal according to the capability indication information.

5. The method of claim 2, wherein, said access network device determining the type of a terminal according to the random access resource information of the terminal, comprises:
said access network device allocating different physical random access PRACH resources for different types of terminals and sending the allocation information to terminals, then said terminal according to the type thereof sending the uplink synchronization signal Preamble on corresponding physical random access PRACH resource location to carry out random access;
said access network device determining the type of a terminal according to the PRACH resource used by the terminal in random access process and the mapping of the PRACH resources and terminals type.

6. The method of claim 2, wherein, said access network device determining the type of a terminal according to the random access resource information of the terminal, comprises:
said access network device partitioning different random access preamble resources for different types of terminals and sending the random access preamble resource allocation information to terminals, then said terminal according the type thereof adopting corresponding uplink random access preamble on the physical random access PRACH resource to carry out random access;
said access network device determining the type of a terminal according to random access preamble index information during random access of the terminal and random access preamble resources corresponding to different types of terminals.

7. The method of claim 2, wherein, said access network device determining the type of a terminal according to random access dedicated message for the terminal, comprises:
when setting different CCCH LCID(logical channel identifications) for different types of terminals, said access network device determining the type of a terminal according to the CCCH LCID (logical channel identifications) those carry by random access dedicated message for the terminal; or,
when MAC CE during random access carries the type information of the terminal, said access network device determining the type of a terminal according to MAC CE carrying by random access of the terminal; or,
when the RRCConnectionRequest message carries the type information of the terminal, said access network device determining the type of a terminal according to RRCConnectionRequest message carrying by random access of the terminal.

8. The method of claim 2, wherein, said access network device determining the type of a terminal according to other messages from the terminal, comprises:
said access network device receiving the RRCConnectionSetupComplete message carrying the type information of terminal from the terminal and determining the type of a terminal according to said RRCConnectionSetupComplete message; or,
the access network device receiving other RRC messages carrying the type information of a terminal from the terminal and determining the type of a terminal according to other RRC messages;
said access network device receiving MAC CE carrying the type information of a terminal from the terminal and determining the type of a terminal according to said MAC CE.

9. The method of claim 1, wherein, said access network device determining a data transmission mode corresponding to the terminal according to the type of the terminal, comprises:
said access network service setting the mapping relationship between the type of the terminal and the data transmission mode and determining a data transmission mode corresponding to the terminal according to the type of the terminal and said mapping relationship.

10. The method of claim 9, wherein, said access network device setting the mapping relationship between the type of the terminal and the data transmission mode, comprises:
said access network device setting the mapping relationship between the type of the terminal and HARQ processes; and/or,
said access network device setting the mapping relationship between the type of the terminal and TB size; and/or,
said access network device setting the mapping relationship between the type of the terminal and the encoding/decoding modes adopted.

11. The method of claim 1, wherein, said access network device determining the type of a terminal according to the information thereof, further comprises:
said access network device carries out data transmission with the terminal by adopting the data transmission mode corresponding to the preset level capability.

12. The method according to any of claims 1 to 11, wherein, the type of said terminal comprises:
said terminal being MTC terminal, or said terminal being H2H terminal, or said terminal being the one requiring special transmission mode.

13. A data transmission device, wherein, comprising:
a first determination module, used for determining the type of a terminal according to the information thereof;
a second determination module, used for determining a data transmission mode corresponding to the terminal according to the type of terminal determined by said first determination module;
a transmission module, used for carrying out a data transmission with the terminal according to the data transmission mode determined by said second determination module.

14. The device of claim 13, wherein,
said first determination module is particularly used for determining the type of a terminal according to the capability indication information that terminal reports; or,
determining the type of a terminal according to the capability indication information of the terminal that core network device indicates or,
determining the type of a terminal according to random access resource information of the terminal or,
determining the type of a terminal according to random access dedicated message for the terminal or,
determining the type of a terminal according to other messages from the terminal.

15. The device of claim 14, wherein,
said first determination module is further used for obtaining the capability information that terminal reports and determining the capability level of the terminal according to said capability information, and determining the type of a terminal according to the mapping relationship between the capability level and the type of the terminal as well as the capability level of the terminal.

16. The device of claim 14, wherein,
said first determination module is further used for receiving capability indication information from the core network device, said capability indication information being used for indicating the type of the terminal, and determining the type of the terminal according to the capability indication information.

17. The device of claim 14, wherein,
said first determination module is further used forallocating different physical random access PRACH resources for different types of terminals and sending the allocation information to terminals, said terminal according to the type thereof sending uplink synchronization signal Preamble on corresponding physical random access PRACH resource location to carry out random access, and then determining the type of a terminal according to the PRACH resource used by the terminal in random access process and the mapping of the PRACH resources and terminals type.

18. The device of claim 14, wherein,
said first determination module is further used for partitioning different random access preamble resources for different types of terminals and sending the random access preamble resource allocation information to terminals, said terminal according the type thereof adopting corresponding uplink random access preambleon the physical random access PRACH resource to carry out random access, and then determining the type of a terminal according to uplink random access preambleindex information during random access of the terminal and uplink random access preambleresources corresponding to different types of terminals.

19. The device of claim 14, wherein,
said first determination module is further used for determining the type of a terminal according to the CCCH LCID(logical channel identifications )those carry by random access dedicated message for the terminal when setting different CCCH LCID (logical channel identifications) for different types of terminals, or determining the type of a terminal according to MAC CE carrying by random access of the terminal when MAC CE during the random access carries the type information of the terminal, or determining the type of a terminal according to RRCConnectionRequest message carrying by random access of the terminal when the RRCConnectionRequest message carries the type information of the terminal.

20. The device of claim 14, wherein,
said first determination module is further used for receiving RRCConnectionSetupComplete message carrying the type information of terminal from the terminal and determining the type of a terminal according to said RRCConnectionSetupComplete message, or receiving other RRC messages carrying the type information of a terminal from the terminal and determining the type of a terminal according to other RRC messages, or receiving MAC CE carrying the type information of a terminal from the terminal and determining the type of a terminal according to said MAC CE.

21. The device of claim 13, wherein,
said second determination module is particularly used for setting the mapping relationship between the type of the terminal and the data transmission mode and determining a data transmission mode corresponding to the terminal according to the type of the terminal and said mapping relationship.

22. The device of claim 21, wherein,
said second determination module is further used for setting the mapping relationship between the type of the terminal and HARQ processes, and/or setting the mapping relationship between the type of the terminal and TB size, and/or setting the mapping relationship between the type of the terminal and the encoding/decoding modes adopted.

23. The device of claim 13, wherein,
said transmission module is further used for carrying out data transmission with the terminal by adopting the data transmission mode corresponding to the preset level capability.
